# FASCICULE DE BREVET EUROPEEN

(11) **EP 2 384 938 B1**
(45) Date de publication et mention de la délivrance du brevet: **05.07.2017**
(21) Numéro de dépôt: 11305528.9
(22) Date de dépôt: 04.05.2011
(51) Int. Cl.: B60R 19/22, B62D 21/15

(54) **Face arrière pour véhicule automobile**
Heck für ein Kraftfahrzeug
Back end for a vehicle

(30) Priorité: 05.05.2010 FR 1053495
(43) Date de publication de la demande: 09.11.2011
(73) Titulaire: Automotive Exteriors Europe, 69007 Lyon (FR)
(72) Inventeur: Gonin, Vincent, 25200, MONTBELIARD (FR)
(74) Mandataire: Remy, Vincent Noel Paul

(56) Documents cités:
- EP-A1- 1 293 389
- EP-A1- 2 135 776
- EP-A1- 2 241 480
- FR-A1- 2 895 341
- FR-A1- 2 908 715
- US-A1- 2006 049 650
- US-B1- 6 196 617

## Description

La présente invention concerne une face arrière d'un véhicule automobile comprenant :
- une structure de caisse
- un élément de face arrière d'un véhicule automobile adapté pour fermer une partie supérieure et une partie inférieure de la structure de caisse du véhicule comprenant :
   - un élément structurel porteur formant un élément d'absorption de l'énergie due à un choc, l'élément d'absorption étant adapté pour répartir les forces générées lors d'un choc arrière vers une surface d'appui de la structure de caisse,
   - un cadre structurel porteur mobile par rapport à la partie supérieure de la structure de caisse.

Le document US 2006/0049650 décrit un tel élément structurel porteur.

Les véhicules automobiles modernes sont conçus pour répondre de façon convenable à différents types de chocs arrières possibles, tel que les chocs à petite vitesse ou « chocs parking », pour une vitesse comprise entre 2,5 et 4 km/h (ECE42) et les chocs à moyenne vitesse ou « chocs réparablilité », pour une vitesse d'environ 16 km/h (Danner).
Le document EP 1 162 116 A1 divulgue un pare-chocs arrière d'un véhicule automobile, comportant un bloc central et deux blocs latéraux. Le bloc central comporte une coque extérieure, entourant une unique traverse métallique, rectiligne et un caisson, dont les extrémités sont en appui, par l'intermédiaire d'amortisseurs de choc, sur les longerons du véhicule.

Les deux blocs latéraux sont fixes et permettent de ce fait au pare-chocs d'être conforme aux normes relatives aux chocs arrière et, en particulier, aux chocs à angle.

Cependant, un tel pare-chocs a une architecture complexe et est donc coûteux à fabriquer. En outre, les blocs latéraux fixes gênent l'accès au volume intérieur du véhicule et réduisent considérablement la dimension transversale du seuil de chargement. De plus il n'est pas optimisé pour intégrer d'autres éléments d'une face arrière du véhicule automobile, tels que les optiques ou autres.

La présente invention a pour but de proposer une face arrière adapté pour absorber efficacement l'énergie lors d'un choc de petite à moyenne vitesse, tout en étant simple et en présentant un coût de fabrication faible et sans limiter l'accès au volume intérieur du véhicule automobile.

A cet effet l'invention a pour objet une face arrière du type précité, dans lequel l'élément structurel porteur est mobile par rapport à la partie inférieure de la structure de caisse, au moins l'élément structurel porteur présente une structure alvéolaire formée d'alvéoles s'étendant longitudinalement au travers de l'élément structurel porteur entre une face arrière et une face avant de l'élément structurel porteur et débouchant sur la face arrière et/ou avant de l'élément structurel porteur et l'élément structurel porteur est solidaire du cadre structurel porteur.

Selon d'autres modes de réalisation, l'invention comporte l'une ou plusieurs des caractéristiques suivantes :
- le cadre structurel porteur présente une structure alvéolaire ou nervurée ;
- les alvéoles sont borgnes du côté de la face avant et/ou de la face arrière ;
- la structure alvéolaire comprend des premières alvéoles borgnes, fermées du côté de la face arrière et ouvertes du côté de la face avant, et des secondes alvéoles borgnes ouvertes du côté de la face arrière et fermées du côté de la face avant ;
- les premières et secondes alvéoles sont réalisées en quinconces ;
- l'élément structurel porteur et le cadre structurel porteur sont réalisés en une matière plastique rigide ;
- l'élément structurel porteur et le cadre structurel porteur sont deux pièces indépendantes adaptées pour être reliées l'une à l'autre de sorte à former une ossature structurelle ;
- l'élément structurel porteur et le cadre structurel porteur sont venus de matière et forment une ossature structurelle ;
- l'élément structurel porteur est monobloc et comprend une première traverse inférieure et une première traverse supérieure s'étendant sensiblement horizontalement et au moins deux jambages verticaux, reliant les premières traverses inférieure et supérieure entre elles, se prolongeant sensiblement vers le haut à partir de la première traverse supérieure et formant chacun un bord latéral de l'élément structurel porteur ;
- l'élément structurel porteur comprend au moins une zone structurelle d'interface multi-usage, telle qu'un support d'un dispositif d'information visuelle ; et
- le cadre structurel porteur comprend une seconde traverse inférieure, une seconde traverse supérieure et deux jambages verticaux reliant les secondes traverses inférieure et supérieure entre elles et formant chacun un bord latéral du cadre structurel porteur.

Selon un autre mode de réalisation la face arrière comprend en outre un bandeau arrière bas recouvrant l'élément structurel porteur du côté face arrière.

Selon d'autres modes de réalisation, la face arrière comporte l'une ou plusieurs des caractéristiques suivantes :
- une lunette arrière du véhicule est disposée sur le cadre structurel porteur de l'élément de face arrière ;
- la face arrière comprend en outre des charnières adaptées pour relier l'élément de face arrière à la structure de caisse du véhicule automobile de façon mobile et/ou des serrures adaptées pour maintenir l'élément de face arrière en appui contre la structure de caisse du véhicule automobile dans une position fermée ; et
- la face arrière se présente sous forme d'un hayon ou d'une porte battante.

L'invention sera mieux comprise à la lecture de la description qui va suivre, donnée uniquement à titre d'exemple et faite en se référant aux dessins annexés, sur lesquels :
- la figure 1 est une vue éclatée en perspective d'une face arrière selon un premier mode de réalisation de l'invention ;
- la figure 2 est une vue éclatée en perspective d'une face arrière selon un second mode de réalisation de l'invention ;
- la figure 3 est une vue éclatée en perspective d'une face arrière d'un véhicule selon l'invention ;
- la figure 4 est une vue éclatée en perspective d'un bandeau arrière bas d'une face arrière d'un véhicule selon l'invention.

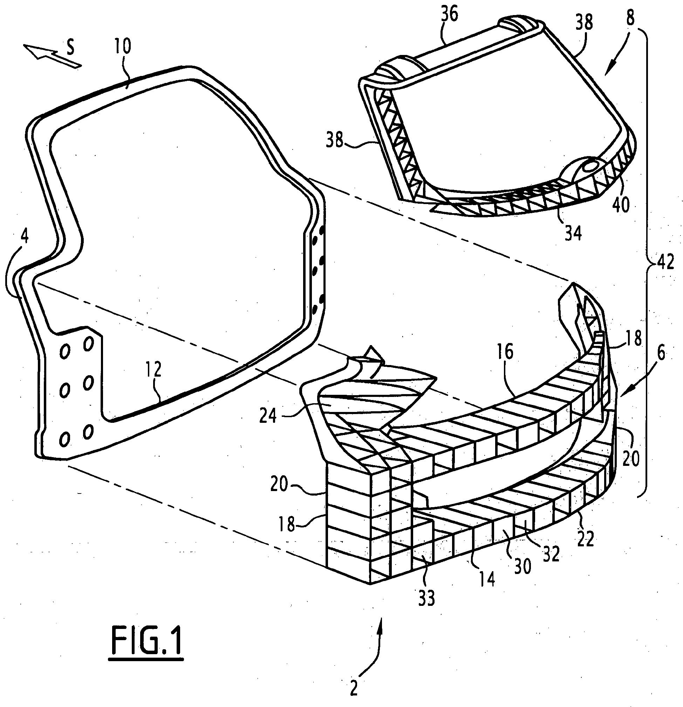

Dans la description qui va suivre, les expressions « avant » et « arrière » s'entendent par référence à l'orientation usuelle des véhicules automobiles, illustrée sur la figure 1 par la flèche S dirigée horizontalement vers l'avant suivant une direction longitudinale du véhicule automobile.

Sur la figure 1 est représenté en vue éclatée un premier mode de réalisation d'un élément de face arrière désigné par la référence 2 et une structure de caisse 4. L'élément de face arrière 2 présente une forme globale adaptée pour coopérer avec la structure de caisse 4. L'élément de face arrière 2 comprend un élément structurel porteur 6 et un cadre structurel porteur 8.

La structure de caisse 4 joue le rôle de dormant d'une ouverture arrière d'un véhicule automobile. La structure de caisse 4 forme un profil fermé constituant une zone d'appui rigide. La structure de caisse 4 comprend une partie supérieure 10 et une partie inférieure 12, laquelle est renforcée pour résister à des petits chocs arrière sans déformation permanente.

La structure de caisse 4 est adaptée pour supporter l'élément structurel porteur 6 et le cadre structurel porteur 8. L'élément structurel porteur 6 est solidaire du cadre structurel porteur 8, l'ensemble constituant un ouvrant arrière de type hayon. La fixation de l'élément 6 au cadre 8 se fait par exemple par vissage ou par collage.

Cet ensemble de l'élément 6 et du cadre 8 constituant un ouvrant est mobile par rapport à la structure de caisse 4 définie par la partie inférieure 12 et la partie supérieure 10, entre une position d'ouverture adaptée pour laisser un accès au volume arrière, et une position de fermeture assurant l'inviolabilité du véhicule.

La zone d'appui offerte par la structure de caisse 4 présente avantageusement des zones renforcées et élargies au droit des longerons arrière, sensiblement comprise entre 100 et 250 mm en largeur, et entre 300 et 400 mm en hauteur. Ces dimensions peuvent varier selon le gabarit du véhicule automobile sans sortir du cadre de l'invention.

L'élément structurel porteur 6 comprend une première traverse inférieure 14, une première traverse supérieure 16 s'étendant sensiblement horizontalement et deux jambages verticaux 18. Néanmoins, le nombre des jambages verticaux 18 n'est pas limité à deux. L'élément structurel porteur 6 peut comprendre un nombre quelconque de jambages verticaux 18. En outre, l'élément structurel porteur 6 peut comprendre des traverses supplémentaires aux premières traverses inférieure et supérieure 14, 16. Pour des raisons esthétiques, les premières traverses inférieure et supérieure 14, 16 et les jambages verticaux 18 peuvent être courbés.

Les deux jambages verticaux 18 relient les extrémités des premières traverses inférieure et supérieure 14, 16 entre elles, et se prolongent sensiblement vers le haut au-dessus de la première traverse supérieure 16. Chaque jambage vertical 18 forme un bord latéral 20 de l'élément structurel porteur 6. La première traverse inférieure 14 forme un bord inférieur 22 de l'élément structurel porteur 6.

En variante, l'élément structurel porteur 6 ne comprend pas de première traverse supérieure 16.

La partie des jambages verticaux 18 dépassant au-dessus de la première traverse supérieure 16 est adaptée pour coopérer avec le cadre structurel porteur 8.

L'élément structurel porteur 6 présente en outre au moins une zone structurelle 24 d'interface multi-usage. Cette zone 24 présente une structure adaptée pour recevoir ou supporter des dispositifs d'information visuelle 26, des accessoires divers et/ou une plaque d'immatriculation.

L'élément structurel porteur 6 présente une épaisseur longitudinale, c'est-à-dire entre une face arrière et une face avant de l'élément structurel porteur 6, sensiblement comprise entre 120 et 220 cm.

L'élément structurel porteur 6 est conformé pour faire office d'absorbeur de l'énergie due à un choc arrière et pour répartir les forces générées lors de ce choc arrière. De préférence, l'élément structurel porteur 6 est prévu pour absorber une énergie supérieure à 5 kJ, de préférence comprise entre 6 et 10kJ, en cas de choc moyenne vitesse (« Danner »).

A cette fin, l'élément structurel porteur 6 présente une structure alvéolaire formée d'alvéoles 30, 32. Les alvéoles 30, 32 s'étendent longitudinalement au travers de l'élément structurel porteur 6 entre la face arrière et la face avant de l'élément structurel porteur 6. Les alvéoles 30, 32 débouchent sur la face arrière et/ou avant de l'élément structurel porteur 6 et sont limités latéralement par des parois 33. De préférence, les alvéoles 30, 32 sont borgnes du côté de la face avant et/ou de la face arrière formant des « crash boxes ». De manière particulièrement préférée, la structure alvéolaire comprend des premières alvéoles 30 borgnes, fermées du côté de la face arrière et ouvertes du côté de la face avant, et des secondes alvéoles 32 borgnes ouvertes du côté de la face arrière et fermées du côté de la face avant. Les premières alvéoles 30 et les secondes alvéoles 32 sont disposées en quinconce (ou damier).

La structure alvéolaire en quinconce permet une conception homogène de l'élément structurel porteur 6, et est destinée à travailler comme absorbeur d'énergie essentiellement en compression selon un mode de flambement. La géométrie choisie, formée d'alvéoles borgnes inversées disposés en quinconces, augmente considérablement la surface d'encollage à l'arrière de l'élément structurel porteur 6 et participe à la répartition favorable des efforts lors d'un choc arrière.

L'élément structurel porteur 6 est monobloc, c'est-à-dire, les premières traverses inférieure et supérieure 14, 16 et les jambages verticaux 18 sont venus de matière ou sont soudés entre eux. L'élément structurel porteur 6 ou individuellement les premières traverses inférieure et supérieure 14, 16 et les jambages verticaux 18 sont réalisés en une matière plastique rigide, par exemple par moulage par injection d'un matériau en polymère thermoplastique, tel que du polypropylène (PP).
La structure alvéolaire facilite la fabrication par moulage par injection. Une pièce moulée présentant la structure alvéolaire précitée réalisée en quinconces (damier) peut être démoulée suivant une unique direction correspondant à la direction longitudinale du véhicule automobile. La réalisation en quinconces permet de ménager un angle de dépouille élevé, ce qui facilite le bon démoulage et permet également l'obtention des alvéoles 30, 32 dont les parois 33 présentent une épaisseur constante. La structure alvéolaire permet des dépouilles faibles, voire nulles. Par conséquent, le démoulage des pièces moulées est encore facilité et peut se faire par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, la structure alvéolaire de l'élément structurel porteur 6 permet également de réduire les épaisseurs locales de parois 33 délimitant les alvéoles 30, 32 tout en conservant une capacité d'absorption d'énergie suffisante. Ainsi, cette épaisseur locale peut être réduite dans une gamme comprise entre 2,5 et 4 mm, avantageusement comprise entre 3 mm et 3,5 mm. L'élément structurel porteur 6 de structure alvéolaire ainsi obtenu est donc léger et présente une économie de matière ce qui limite le coût de fabrication.

En outre, les dépouilles faibles voir nulles de la structure alvéolaire en damier de l'élément structurel porteur 6 permettent d'obtenir une raideur uniforme lors d'un enfoncement longitudinal, par exemple lors d'un choc à moyenne vitesse. Ainsi, il est possible d'obtenir un palier d'effort sensiblement constant en fonction de la compression de l'élément structurel porteur 6, ce qui augmente la fraction de l'énergie dissipée et diminue la course d'absorption, tout en évitant une déformation d'autres éléments du véhicule automobile.

Le cadre structurel porteur 8 comprend une seconde traverse inférieure 34, une seconde traverse supérieure 36 s'étendant sensiblement horizontalement et deux jambages verticaux 38. Les deux jambages verticaux 38 sont agencés entre les secondes traverses inférieure et supérieure 34, 36 de sorte à relier les extrémités des secondes traverses inférieure et supérieure 34, 36 entre elles en formant un cadre.

La seconde traverse inférieure 34 forme un bord inférieur 40 du cadre structurel porteur 8. Le bord inférieur 40 est adapté pour coopérer avec la partie des jambages verticaux 18 dépassant au-dessus de la première traverse supérieure 16 de l'élément structurel porteur 6, soit de manière permanente (assemblage du cadre structurel porteur 8 et de l'élément structurel porteur 6 pour constituer un ouvrant unique type hayon), soit de manière non permanente (verrouillage et déverrouillage avec mobilité du cadre structurel porteur 8 par rapport à l'élément structurel porteur 6 ou vice versa entre une position ouverte et une position fermée).

Le cadre structurel porteur 8 est monobloc, c'est-à-dire, les secondes traverses inférieure et supérieure 34, 36 et les jambages verticaux 38 sont avantageusement venus de matière (unique injection) ou soudés entre eux. Le cadre structurel porteur 8 ou individuellement les secondes traverses inférieure et supérieure 34, 36 et les jambages verticaux 38 sont réalisés en une matière plastique rigide, par exemple par moulage par injection d'un matériau en polymère thermoplastique, tel que du polypropylène (PP).

Le cadre structurel porteur 8 présente une structure alvéolaire telle que précitée ou une structure nervurée.

Dans le mode de réalisation où l'élément structurel porteur 6 ne comprend pas de première traverse supérieure 16, la seconde traverse inférieure 34 du cadre structurel porteur 8 permet de repartir l'énergie due à un choc entre les jambages 18 de l'élément structurel porteur 6.

Dans le premier mode de réalisation, représenté sur la figure 1, l'élément structurel porteur 6 et le cadre structurel porteur 8 sont réalisés en deux pièces individuelles adaptées pour être assemblées entre elles par collage, soudage friction, laser, ou encore par vissage. Le cadre 8 est agencé au-dessus de l'élément 6 et le bord inférieur 40 du cadre 8 est fixé à la partie des jambages verticaux 18 dépassant au-dessus de la première traverse supérieure 16 de l'élément 6 formant une ossature structurelle 42.

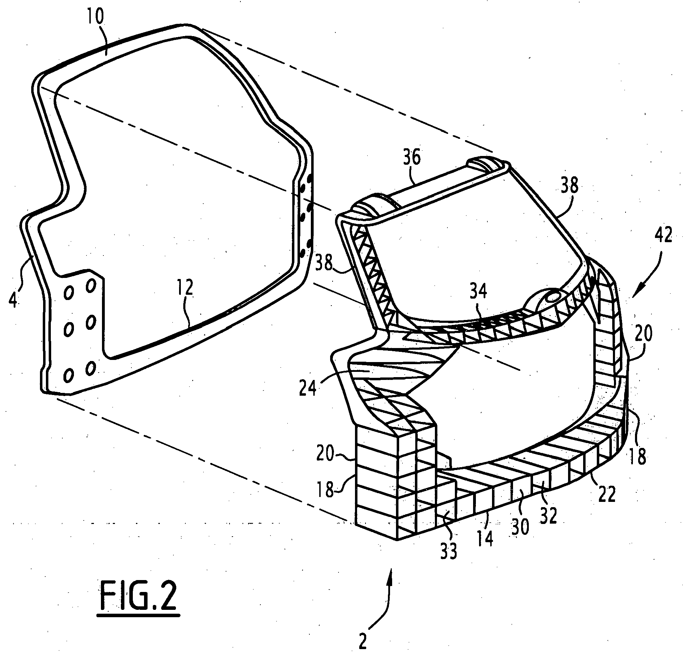

Dans un second mode de réalisation, l'ossature structurelle 42 est venue de matière tel que représenté sur la figure 2. L'ossature structurelle 42 est réalisée par moulage par injection. Les éléments de l'ossature structurelle 42 venue de matière (second mode de réalisation) sont identiques à celles de l'ossature structurelle 42 assemblée à partir de l'élément 6 et du cadre 8 (premier mode de réalisation). Là encore, la première traverse supérieure 16 peut être présente ou omise.

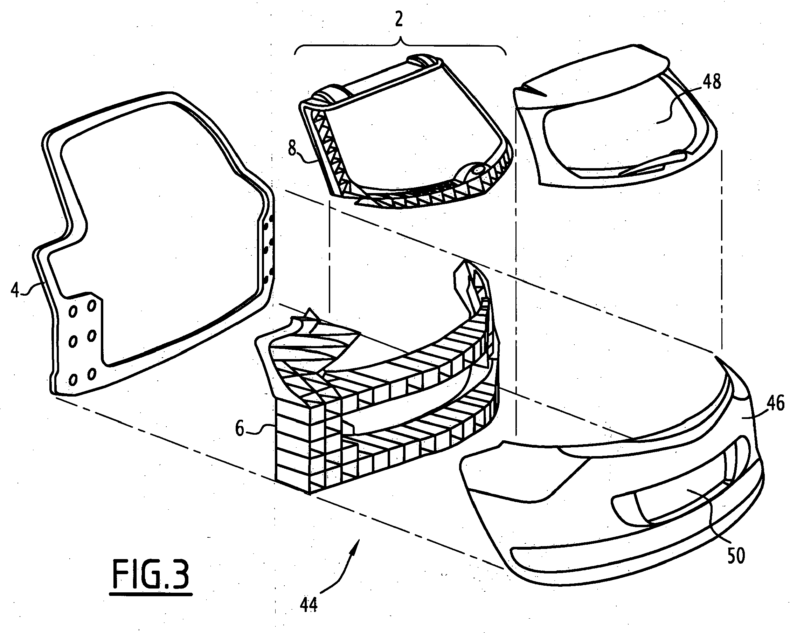

Une face arrière 44 d'un véhicule est représentée sur la figure 3. La face arrière 44 comprend la structure de caisse 4, l'élément de face arrière 2 selon le premier ou second mode de réalisation, un bandeau arrière bas 46 et un bandeau arrière haut 48. Dans l'exemple représenté sur la figure 3, l'élément de face arrière 2 est celui selon le premier mode de réalisation.

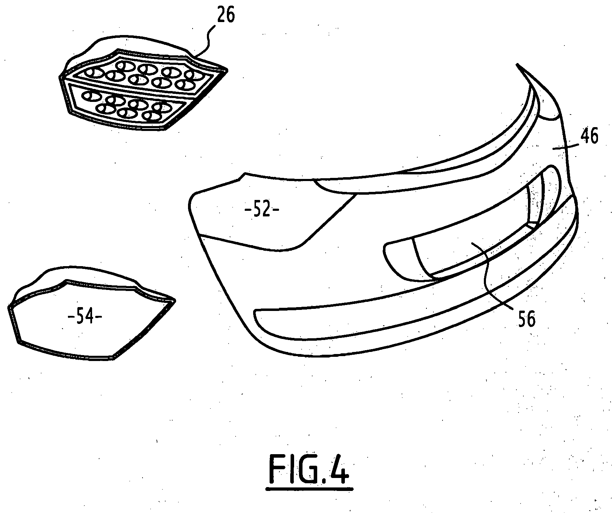

Le bandeau arrière bas 46 est adapté pour être fixé du côté arrière sur l'élément structurel porteur 6 et est destiné à former la partie externe de carrosserie en partie basse du véhicule, Le bandeau arrière bas 46 peut être un panneau de carrosserie métallique ou plastique. Le bandeau arrière bas 46 est représenté plus en détail sur la figure 4.

Le bandeau arrière bas 46 comprend des zones structurelles 50 d'interface multi-usage adaptées pour coopérer avec les zones structurelles 24 de l'élément structurel porteur 6. Dans l'exemple représenté sur la figure 4, les zones structurelles 50 comprennent une première zone 52 adaptée pour recevoir un boitier d'éclairage 54 muni du dispositif d'information visuelle 26 et une seconde zone 56 adaptée pour recevoir la plaque d'immatriculation. Néanmoins, d'autres zones structurelles 50 que les première et seconde zones 52, 56 sont envisageable.

Le bandeau arrière haut 48 est adapté pour être fixé du côté arrière sur le cadre structurel porteur 8 et est destiné à former la partie externe de carrosserie en partie haute du véhicule. Le bandeau arrière haut 48 peut être une lunette arrière. En variante, le bandeau arrière haut 48 peut également intégrer un becquet.

Les bandeaux arrières bas et haut 46, 48 peuvent être reliés entre eux en formant une structure intégrale. Pour des raisons de réparabilité de la face arrière 44 après un choc arrière, par exemple, il est néanmoins préférable de les dissocier et de les monter individuellement sur l'ossature structurelle 42.

Le bandeau arrière haut 48 peut être fusionné en une seule pièce avec le cadre structurel porteur 8, mais, là encore, il est avantageux de les dissocier pour des raisons de réparibilité et aussi pour des raisons de fabrication.

La face arrière 44 comprend en outre des charnières (non représentées) adaptées pour relier l'élément de face arrière 2 à la structure de caisse 4 du véhicule automobile de façon mobile, notamment pivotant. Les charnières peuvent être localisées sur un bord latéral, supérieur ou inférieur de l'élément de face arrière 2. La face arrière 44 comprend en outre des serrures (non représentées) adaptées pour maintenir l'élément de face arrière 2 en appui contre la structure de caisse 4 du véhicule automobile dans une position fermée.

La face arrière 44 telle que décrite ci-dessus fait office d'un hayon ou d'une porte battante arrière du véhicule automobile.

L'élément de face arrière 2 selon l'invention comprend peu de pièces individuelles qui sont en outre légères et grâce à la structure alvéolaire simple à fabriquer tout en absorbant efficacement l'énergie d'un choc arrière. Par conséquent, le coût de fabrication de cet élément de face arrière 2 est faible. La conception des composants élémentaires de la face arrière 44 permet de réparer simplement l'élément d'absorption d'énergie, notamment l'élément structurel porteur 6, sans échanger toute la face arrière 44. Ceci réduit le coût d'une réparation. En outre, l'élément d'absorption d'énergie selon l'invention ne gêne pas l'accès au volume intérieur du véhicule et permet d'intégrer des éléments structurels, tels que des optiques, des capteurs de stationnement et/ou des caméras de recul.

L'agencement des éléments structurels étant rapportés sur l'ossature structurelle 42, les uns par rapport aux autres, est optimisé et permet un traitement optimal des jeux et affleurements des éléments entre eux. Ainsi, les jeux entre les supports optiques 54 et la carrosserie de la face arrière et entre la lunette arrière 48 et la carrosserie sont supprimés. On obtient ainsi une face arrière présentant une esthétique satisfaisante.

## Revendications

1. Face arrière (44) d'un véhicule automobile comprenant :
- une structure de caisse (4)
- un élément de face arrière (2) d'un véhicule automobile adapté pour fermer une partie supérieure (10) et une partie inférieure (12) d'une structure de caisse (4) du véhicule comprenant :
- un élément structurel porteur (6) formant un élément d'absorption de l'énergie due à un choc, l'élément d'absorption étant adapté pour répartir les forces générées lors d'un choc arrière vers une surface d'appui de la structure de caisse (4),
- un cadre structurel porteur (8) mobile par rapport à la partie supérieure (10) de la structure de caisse (4)
**caractérisé en ce que** l'élément structurel porteur (6) est mobile par rapport à la partie inférieure (12) de la structure de caisse (4), **en ce qu'**au moins l'élément structurel porteur (6) présente une structure alvéolaire formée d'alvéoles (30, 32) s'étendant longitudinalement au travers de l'élément structurel porteur (6) entre une face arrière et une face avant de l'élément structurel porteur (6) et débouchant sur la face arrière et/ou avant de l'élément structurel porteur (6) et **en ce que** l'élément structurel porteur (6) est solidaire du cadre structurel porteur (8).

2. Face arrière (2) selon la revendication 1 dans lequel le cadre structurel porteur (8) présente une structure alvéolaire ou nervurée.

3. Face arrière (2) selon la revendication 1 ou 2 dans lequel les alvéoles (30, 32) sont borgnes du côté de la face avant et/ou de la face arrière.

4. Face arrière (2) selon l'une quelconque des revendications précédentes dans lequel la structure alvéolaire comprend des premières alvéoles (30) borgnes, fermées du côté de la face arrière et ouvertes du côté de la face avant, et des secondes alvéoles (32) borgnes ouvertes du côté de la face arrière et fermées du côté de la face avant.

5. Face arrière (2) selon la revendication 4 dans lequel les premières et secondes alvéoles (30, 32) sont réalisées en quinconces.

6. Face arrière (2) selon l'une quelconque des revendications 1 à 5 dans lequel l'élément structurel porteur (6) et le cadre structurel porteur (8) sont réalisés en une matière plastique rigide.

7. Face arrière (2) selon l'une quelconque des revendications 1 à 6 dans lequel l'élément structurel porteur (6) et le cadre structurel porteur (8) sont deux pièces indépendantes adaptées pour être reliées l'une à l'autre de sorte à former une ossature structurelle (42).

8. Face arrière (2) selon l'une quelconque des revendications 1 à 6 dans lequel l'élément structurel porteur (6) et le cadre structurel porteur (8) sont venus de matière et forment une ossature structurelle (42).

9. Face arrière (2) selon l'une quelconque des revendications 1 à 8 dans lequel l'élément structurel porteur (6) est monobloc et comprend une première traverse inférieure (14) et une première traverse supérieure (16) s'étendant sensiblement horizontalement et au moins deux jambages verticaux (18), reliant les premières traverses inférieure et supérieure (14, 16) entre elles, se prolongeant sensiblement vers le haut à partir de la première traverse supérieure (16) et formant chacun un bord latéral (20) de l'élément structurel porteur (6).

10. Face arrière (2) selon l'une quelconque des revendications 1 à 9 dans lequel l'élément structurel porteur (6) comprend au moins une zone structurelle (24) d'interface multi-usage, telle qu'un support (54) d'un dispositif d'information visuelle (26).

11. Face arrière (2) selon l'une quelconque des revendications 1 à 10 dans lequel le cadre structurel porteur (8) comprend une seconde traverse inférieure (34), une seconde traverse supérieure (36) et deux jambages verticaux (38) reliant les secondes traverses inférieure et supérieure (34, 36) entre elles et formant chacun un bord latéral du cadre structurel porteur (8).

12. Face arrière (44) d'un véhicule automobile selon l'une quelconque des revendications 1 à 11 comprenant en outre un bandeau arrière bas (46) recouvrant l'élément structurel porteur (6) du côté face arrière.

13. Face arrière (44) selon la revendication 12 dans laquelle une lunette arrière du véhicule est disposée sur le cadre structurel porteur (8) de l'élément de face arrière (2).

14. Face arrière (44) selon la revendication 12 ou 13 comprenant en outre des charnières adaptées pour relier l'élément de face arrière (2) à la structure de caisse (4) du véhicule automobile de façon mobile et/ou des serrures adaptées pour maintenir l'élément de face arrière (2) en appui contre la structure de caisse (4) du véhicule automobile dans une position fermée.

15. Face arrière (44) selon l'une quelconque des revendications 12 à 14 qui se présente sous forme d'un hayon ou d'une porte battante.

## Patentansprüche

1. Heck (44) eines Kraftfahrzeugs, umfassend:
- eine Karosseriestruktur (4),
- ein Heckelement (2) eines Kraftfahrzeugs, das eingerichtet ist, einen oberen Abschnitt (10) und einen unteren Abschnitt (12) einer Karosseriestruktur (4) des Fahrzeugs zu bilden, umfassend:
- ein Tragstrukturelement (6), welches ein Element zur Absorption von Energie auf Grund eines Aufpralls bildet, wobei das Absorptionselement eingerichtet ist, um die im Falle eines Heckaufpralls erzeugten Kräfte zu einer Auflagefläche der Karosseriestruktur (4) weiterzuleiten bzw. zu verteilen,
- einen Tragstrukturrahmen (8), der mit Bezug auf den oberen Abschnitt (10) der Karosseriestruktur (4) beweglich ist,
**dadurch gekennzeichnet, dass** das Tragstrukturelement (6) mit Bezug auf den unteren Abschnitt (12) der Karosseriestruktur (4) beweglich ist, dass zumindest das Tragstrukturelement (6) eine zellenartige Struktur aufweist, die durch Zellen (30, 32) gebildet wird, die sich zwischen einer Rückseite und einer Vorderseite des Tragstrukturelements (6) in Längsrichtung durch das Tragstrukturelement (6) erstrecken und die in der Rückseite und/oder der Vorderseite des Tragstrukturelements (6) münden, und dass das Tragstrukturelement (6) fest mit dem Tragstrukturrahmen (8) verbunden ist.

2. Heck (44) nach Anspruch 1, wobei der Tragstrukturrahmen (8) eine zellenförmige oder gerippte Struktur aufweist.

3. Heck (44) nach Anspruch 1 oder 2, wobei die Zellen auf der Seite der Vorderseite und/oder der Rückseite des Tragstrukturelements (6) blind bzw. geschlossen sind.

4. Heck (44) nach einem der vorstehenden Ansprüche, wobei die zellenartige Struktur erste blinde Zellen (30), welche auf der Rückseite geschlossen und auf der Vorderseite offen sind, und zweite blinde Zellen (32) aufweist, welche auf der Rückseite offen und auf der Vorderseite geschlossen sind.

5. Heck (44) nach Anspruch 4, wobei die ersten und zweiten Zellen (30, 32) versetzt bzw. schachbrettartig angeordnet sind.

6. Heck (44) nach einem der Ansprüche 1 bis 5, wobei das Tragstrukturelement (6) und der Tragstrukturrahmen (8) aus einem steifen Kunststoffmaterial gebildet sind.

7. Heck (44) nach einem der Ansprüche 1 bis 6, wobei das Tragstrukturelement (6) und der Tragstrukturrahmen (8) zwei getrennte Teile sind, die dazu eingerichtet sind, miteinander verbunden zu werden, derart, einen Strukturrahmen (42) zu bilden.

8. Heck (44) nach einem der Ansprüche 1 bis 6, wobei das Tragstrukturelement (6) und der Tragstrukturrahmen (8) einstückig sind und einen Strukturrahmen (42) bilden.

9. Heck (44) nach einem der Ansprüche 1 bis 8, wobei das Tragstrukturelement (6) einstückig ist und einen ersten unteren Querträger (14) und einen ersten oberen Querträger (16) aufweist, welche sich im Wesentlichen horizontal erstrecken, und wenigstens zwei den ersten unteren Querträger (14) und den ersten oberen Querträger (16) miteinander verbindende vertikale Pfosten (18), welche sich ausgehend von dem ersten oberen Querträger (16) im Wesentlichen nach oben erstrecken und jeweils eine Seitenkante (20) des Tragstrukturelements (6) bilden.

10. Heck (44) nach einem der Ansprüche 1 bis 9, wobei das Tragstrukturelement (6) zumindest einen Multifunktionsschnittstellenstrukturbereich (24) aufweist, wie etwa einen Träger (54) einer visuellen Informationsvorrichtung (26).

11. Heck (44) nach einem der Ansprüche 1 bis 10, wobei der Tragstrukturrahmen (8) einen zweite unteren Querträger (34), einen zweiten oberen Querträger (36) und zwei vertikale Pfosten (38) aufweist, welche den zweiten unteren Querträger (34) und den zweiten oberen Querträger (36) miteinander verbinden und jeweils eine Seitenkante (20) des Tragstrukturelements (6) bilden.

12. Heck (44) eines Kraftfahrzeugs nach einem der Ansprüche 1 bis 11, weiter umfassend eine hintere untere Blende (46), welche das Tragstrukturelement (6) auf Seiten der Rückseite abdeckt.

13. Heck (44) nach Anspruch 12, wobei ein Heckfenster des Fahrzeugs auf dem Tragstrukturrahmen (8) des Heckelementes (2) angeordnet ist.

14. Heck (44) nach Anspruch 12 oder 13, ferner umfassend Scharniere, welche eingerichtet sind, das Heckelement (2) beweglich mit der Karosseriestruktur (4) des Kraftfahrzeugs zu verbinden, und/oder Schlösser, welche eingerichtet sind, das Heckelement (2) in einer geschlossenen Position in Auflage gegen die Karosseriestruktur (4) des Kraftfahrzeugs zu halten.

15. Heck (44) nach einem der Ansprüche 12 bis 14, das sich in Form einer Heckklappe oder einer Schwingtür darstellt.

## Claims

1. Back end (44) of a motor vehicle comprising:
- a body structure (4)
- a back end element (2) of a motor vehicle adapted to close an upper part (10) and a lower part (12) of a body structure (4) of the vehicle comprising:
- a supporting structural element (6) forming an element for absorbing the energy due to an impact, the absorbing element being adapted to distribute the forces generated during a rear impact towards a bearing surface of the body structure (4),
- a supporting structural frame (8) movable relative to the upper part (10) of the body structure (4)
**characterised in that** the supporting structural element (6) is movable relative to the lower part (12) of the body structure (4), **in that** at least the supporting structural element (6) has a honeycomb structure formed of cells (30, 32) extending longitudinally through the supporting structural element (6) between a back end and a front end of the supporting structural element (6) and opening onto the back and/or front ends of the supporting structural element (6) and **in that** the supporting structural element (6) is attached to the supporting structural frame (8).

2. Back end (2) according to claim 1, wherein the supporting structural frame (8) has a honeycomb or ribbed structure.

3. Back end (2) according to claim 1 or 2, wherein the cells (30, 32) are closed on the side of the front and/or back ends.

4. Back end (2) according to any one of the preceding claims, wherein the honeycomb structure comprises first closed cells (30), closed on the side of the back end and open on the side of the front end, and second closed cells (32) open on the side of the back end and closed on the side of the front end.

5. Back end (2) according to claim 4, wherein the first and second cells (30, 32) are formed in staggered rows.

6. Back end (2) according to any one of claims 1 to 5, wherein the supporting structural element (6) and the supporting structural frame (8) are made of a rigid plastic material.

7. Back end (2) according to any one of claims 1 to 6, wherein the supporting structural element (6) and the supporting structural frame (8) are two separate parts adapted to be connected to one another so as to form a structural framework (42).

8. Back end (2) according to any one of claims 1 to 6, wherein the supporting structural element (6) and the supporting structural frame (8) are produced in one piece and form a structural framework (42).

9. Back end (2) according to any one of claims 1 to 8, wherein the supporting structural element (6) is monobloc and comprises a first lower cross-member (14) and a first upper cross-member (16) extending substantially horizontally and at least two vertical struts (18), connecting the first lower and upper cross-members (14, 16) together, extending substantially upwards from the first upper cross-member (16) and each forming a lateral edge (20) of the supporting structural element (6).

10. Back end (2) according to any one of claims 1 to 9, wherein the supporting structural element (6) comprises at least one multi-purpose interface structural zone (24), such as a support (54) for a visual information device (26).

11. Back end (2) according to any one of claims 1 to 10, wherein the supporting structural frame (8) comprises a second lower cross-member (34), a second upper cross-member (36) and two vertical struts (38) connecting the second lower and upper cross-members (34, 36) together and each forming a lateral edge of the supporting structural frame (8).

12. Back end (44) of a motor vehicle according to any one of claims 1 to 11, further comprising a lower rear strip (46) covering the supporting structural element (6) on the back end side.

13. Back end (44) according to claim 12, wherein a rear window of the vehicle is arranged on the supporting structural frame (8) of the back end element (2).

14. Back end (44) according to claim 12 or 13, further comprising hinges adapted to movably connect the back end element (2) to the body structure (4) of the motor vehicle and/or locks adapted to hold the back end element (2) against the body structure (4) of the motor vehicle in a closed position.

15. Back end (44) according to any one of claims 12 to 14, which takes the form of a tailgate or a swing door.
